Europäisches Patentamt

European Patent Office

Office européen des brevets

(19)

(11) Veröffentlichungsnummer: **0 140 942**
**B1**

(12) # EUROPÄISCHE PATENTSCHRIFT

(45) Veröffentlichungstag der Patentschrift:
03.08.88

(21) Anmeldenummer: **84901740.5**

(22) Anmeldetag: **13.04.84**

(86) Internationale Anmeldenummer:
**PCT/DE 84/00091**

(87) Internationale Veröffentlichungsnummer:
**WO 84/04178 (25.10.84** Gazette **84/25)**

(51) Int. Cl.⁴: **G 03 B 35/08,** G 03 B 21/64,
G 03 B 35/18

(54) **KLEINBILD-STEREO-SYSTEM.**

(30) Priorität: **15.04.83 DE 3313935**

(43) Veröffentlichungstag der Anmeldung:
**15.05.85 Patentblatt 85/20**

(45) Bekanntmachung des Hinweises auf die Patenterteilung:
**03.08.88 Patentblatt 88/31**

(84) Benannte Vertragsstaaten:
**AT BE CH FR GB LI NL SE**

(56) Entgegenhaltungen:
**WO - A - 83/01125**
**DE - A - 2 056 028**
**DE - A - 3 124 116**
**FR - A - 2 069 325**

**Die Akte enthält technische Angaben, die nach dem Eingang der Anmeldung eingereicht wurden und die nicht in dieser Patentschrift enthalten sind.**

(73) Patentinhaber: **Schulte, Gerd,**
**Martin-Luther-Strasse 32-38, D-1000 Berlin 28 (DE)**

(72) Erfinder: **Schulte, Gerd, Martin-Luther-Strasse 32-38,**
**D-1000 Berlin 28 (DE)**

**Beschreibung**

Die Erfindung betrifft ein Kleinbild-Stereo-System, bei dem mit einer Stereokamera auf einem Kleinbildfilm durch einen Trennsteg getrennte Stereobilder erzeugt werden, die unzerschnitten in einem Stereorahmen gefaßt und mit einem Stereoprojektor projiziert werden können, wobei der Objektivabstand der Kamera und der des Stereoprojektors etwas kleiner bemessen sind als der Bildfensterrahmenabstand.

Aus der DE-A-2 056 028 ist ein solches System bekannt, welches mit einem Rahmenabstand von 57 mm und 45 mm breiten Halbbildern arbeitet. Während der Schaltschritt hierbei 24 bzw. 22 Perforationen betragen soll, ist die Nutzung der verbleibenden freien Stegbreite für die Aufzeichnung ergänzender Daten vorgesehen. Auf eine Verfälschung der Raumtiefeverhältnisse, welche aus der Abweichung des angenommenen Objektivabstands von 55,5 mm vom mittleren menschlichen Augenabstand von 63,5 mm herrühre, wird in der Beschreibung hingewiesen, diese aber als kaum wahrnehmbar angesehen. In einer weiteren Ausgestaltung der Erfindung wird außerdem noch ein Rahmenabstand von 47,5 mm angegeben, der offenbar zur Verminderung der Trennstegbreite und damit des Schaltschritts dienen soll.

Der Vorteil gegenüber den in der DIN 5431 aufgeführten Halbbildanordnungen mit dem genormten Rahmenabstand von 62 mm ist zweifellos die bedeutend erhöhte Präzision und Sicherheit bei der Stereoprojektion, da alle durch das Trennen und Vertauschen der Halbbilder bei der Montage entstehenden Probleme grundsätzlich entfallen. Allerdings dürfte der vorgeschlagene Rahmenabstand von 47,5 mm mit demgegenüber weiter vermindertem Objektivabstand sich bereits nachteilig auf die Projektorkonstruktion auswirken, zumal die optischen Anforderungen noch durch das Breitformat mit einem Seitenverhältnis von 1:1,84 zusätzlich verschärft werden.

Angesichts der weltweit standardisierten Flachbildfotografie im Format 24 x 36 ist jedoch eine weitere Vermehrung und Zersplitterung der ohnehin zu vielen Stereoformate als besonders nachteilig anzusehen, weil die unangemessene Vielfalt jede rationelle Verbreitung der Stereofotografie verhindert. Kennzeichnend für die jetzige Lage ist deshalb die zunehmende Verbreitung gängiger Flachbildkameras und -projektoren auch für stereoskopische Zwecke, ungeachtet ihrer begrenzten Tauglichkeit und umständlichen Handhabung. Bei der zitierten DE-A-2 056 028 wird die weitgehend willkürliche Festlegung der Rahmenabstände umgekehrt aus der angestrebten narrensicheren Anwendung für Unterrichtszwecke erklärlich, da hierbei ohnehin vor allem ungerahmte, zusammenhängende Filmstreifen mittels eines speziellen Doppelprojektors projiziert werden sollen.

Der Erfindung liegt daher die Aufgabe zugrunde, ein konstruktiv möglichst einfaches, narrensicheres und vielseitig nutzbares, hochwertiges Kleinbild-Stereo-System unter Berücksichtigung vorhandener Normen und Systeme aufzuzeigen.

Diese Aufgabe wird erfindungsgemäß dadurch gelöst, daß der Bildfensterrahmenabstand 50 mm und die Breite des Stereorahmens 100 mm beträgt, so daß die Stereobildpaare wahlweise neben Standard-Kleinbilddiapositiven des Formats 50 x 50 mm projiziert werden können.

Das vorgeschlagene Kleinbild-Stereo-System ist per definitionem in das sogenannte 2 x 5 x 5-System eingebunden, welches dadurch zu einem wirklichen 5 x 10-System wird. Dabei ist die Kamerakonstruktion einfach, aber ohne qualitätsmindernde Kompromisse. Lediglich an unkritischer Stelle im Pseudoskopbetrachter werden bildumkehrende Dachkantspiegel verwendet mit dem zusätzlichen Vorteil einer optimalen Augenabstandsanpassung. Leicht lassen sich die Albadaschen Bedingungen der Weitwinkel-Stereoskopie mit möglichen Bildformaten von 24 x 34 bis 24 x 42 und entsprechend angepaßten Brennweiten von 33...40 mm erfüllen. Es soll hier noch besonders betont werden, daß die aus dem Rahmenabstand resultierende Kamerabasis von 48,7...49 mm keinerlei Einschränkung bedeutet, sondern gerade das Gegenteil. Sie entspricht in der Stereowirkung in Verbindung mit einer Kamerabrennweite von 38...40 mm weitgehend einem Basis-Brennweiten-Verhältnis von 63,5:50. Bei übereinstimmender Aufnahme- und Betrachtungs-(Brenn-)-Weite ist eine 25%ige Basisverminderung gegenüber dem durchschnittlichen menschlichen Augenabstand gerade noch nicht erkennbar. Die verringerte stereoskopische Parallaxe wirkt aber nicht nur entspannend für die Augen, sondern vergrößert auch den erfaßbaren Tiefenbereich. Durch das auf 1,5 m herangerückte Scheinfenster ist praktisch im ganzen Normalbereich von 1,5 m bis ∞ problemloses Stereofotografieren möglich.

Den aufnahmeseitigen Vorteilen stehen zudem die wiedergabeseitigen nicht nach. Wenn sich bei der Stereoprojektion ein am nächsten zur Projektionswand sitzender Zuschauer gerade im Perspektivzentrum befindet, ist für ihn die – aus der verminderten Aufnahmebasis resultierende – Verflachung von 25% gerade noch nicht bemerkbar. Ähnliches gilt für einen doppelt so weit entfernt sitzenden Zuschauer, von welchem die leichte Vertiefung von 50%, wenn sie bemerkt wird, als angenehm empfunden wird. Ohne Basisreduzierung würde dagegen die Tiefenverzerrung bereits störende 100% betragen.

Der effektive Rahmenabstand gestattet aber nicht nur die Verwendung lichtstarker Projektionsobjektive, sondern auch einen maximalen Lichtstrom durch zwei getrennte, optimal auf die Halbbildgrößen abgestimmte Kondensorsysteme, wobei auch den Mindestabmessungen von Projektionsobjektiven und Kondensorsystemen Rechnung getragen wird. Mit fast genau 10,5 Perforationen entspricht der erfindungsgemäße Rahmenabstand der n-plus-einhalb-Bedingung (n = natürliche Zahl) für eine vertauschungssichere Perforationszuordnung. Dabei können sowohl 5 x 10-Dias mit unzerschnittenen Bildpaaren als auch getrennt gerahmte 5 x 5-Diapaare wahlweise verwendet werden, da die Gesamtabmessungen gleich sind. Bei getrennter Weiterverarbeitung im sogenannten 2 x 5 x 5-System ist durch die vertauschungssichere Perforationszuordnung und Rahmenkennzeichnung sowie die zweifache, ebenfalls kennzeichnende Datenaufzeichnung auch hier eine maximale Automatisierung der Handhabung erreicht.

Überraschenderweise ist es also tatsächlich möglich, durch die erfindungsgemäße Dimensionierung und eine Feinabstimmung aller Systembestandteile die vorteilhaften Eigenschaften der Einband-Stereofilmverfahren zu erreichen oder zu übertreffen, ohne deren Nachteile in Kauf nehmen zu müssen.

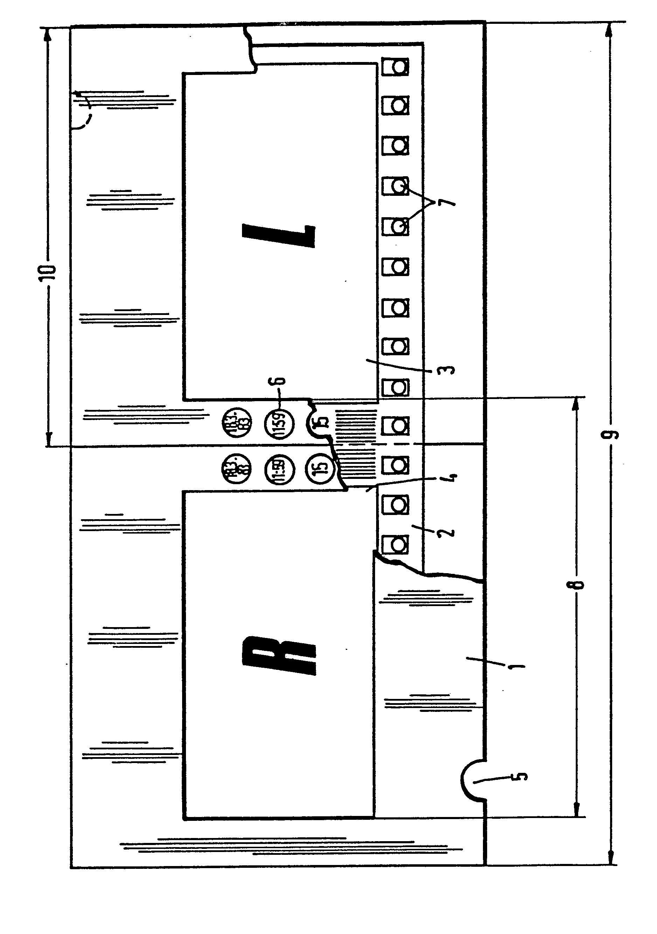

Die einzige Figur zeigt schematisch ein erfindungsgemäß hergestelltes Stereodia in einem Rahmen 5 × 10 bzw. zwei 5 × 5-Rahmen. Zur besseren Anschauung ist der obere Rahmen teilaufgebrochen.

Der Aufbau von Stereokameras und Stereoprojektoren, bei dem der unbelichtete oder belichtete Film an zwei Ojektiven vorbeigeführt wird, ist grundsätzlich bekannt. Der Abstand zwischen den Objektiven ist so zu wählen, daß der Film entsprechend der Figur und wie im folgenden beschrieben belichtet wird. In der Figur ist mit 1 der Rahmen bezeichnet, 2 ist das bereits zurechtgeschnittene Filmstück mit einer Länge von insgesamt zwanzig Perforationen. Das linke Halbbild 3 ist vom rechten Halbbild 4 durch einen Trennsteg getrennt, auf dem durch die Kamera belichtete Aufzeichnungen 6 aufgezeichnet werden können. Im vorliegenden Ausführungsbeispiel sind die Aufzeichnungen 6 unter anderem als drei Datenpunkte ausgebildet, auf denen oben Tag, Monat, Jahr, in der Mitte Stunde und Minuten und unten die laufende Bildnummer dargestellt sind. Außerdem können durch den Rahmen 1 verdeckte Daten in kodierter Form, beispielsweise zur Filmbearbeitung, vorgesehen sein. Im Rahmen sind Ausnehmungen 5 vorgesehen, die als Rahmenkennzeichnung dienen. Der Rahmen 1 weist Noppen 7 auf, die auf beiden Seiten in die Filmperforation eingreifen und für eine gute Planlage und die stereoskopische exakte Ausrichtung der Halbbilder sorgen.

Der Rahmen- oder Bildfensterabstand 8 bildet mit 50 mm eine universelle Systemkonstante, von der sich auch die Basis der nicht dargestellten Stereokamera mit einem Geradeausstrahlengang und einem einfachen Schaltschritt herleitet.

Mit Berücksichtigung der automatischen Scheinfensterwirkung beträgt der Objektivabstand 48,7 bis 49 mm, wobei beide Halbbilder in «augenwidriger» Zuordnung benachbart aufgezeichnet werden und auch so verbleiben, es sei denn, daß eine Verwendung im 2 × 5 × 5-System gewünscht wird, das aber einen gleichen Rahmenabstand nebeneinanderliegender Einzeldias aufweist, so daß auch diese ohne Schwierigkeiten in einem 5 × 10-Systemprojektor vorgeführt werden können. Bei dem erfindungsgemäßen System sind drei Breitformate möglich, 24 × 34 mit achtzehn Perforationen, 24 × 36 bis 38 mit neunzehn Perforationen und 24 × 40 bis 42 mit zwanzig Perforationen Filmbedarf pro Stereobild. Am schmalsten ist der Trennsteg bei der letztgenannten und in der Figur dargestellten Variante. Zur Vermeidung eines Bildbreitenverlustes bei der Scheinfensteranpassung im Nahbereich bis unter 1 m können die Kamerabildfenster nach außen hin verbreitert werden. Bei den Diarahmen kann eine Nahanpassung gegebenenfalls durch versetzte Noppen 7 erfolgen.

Zur Aufnahme der auf den Trennsteg aufzubringenden Daten kann die Kamera mit einer Vorrichtung versehen sein, die die Daten zum Beispiel auf einem Leuchtdioden-Display oder dergleichen darstellt und anzeigt und die beispielsweise über zwei kleine Doppeloptiken, die die angezeigten Daten erfassen, den Film entsprechend belichtet.

**Patentansprüche**

1. Kleinbild-Stereo-System, bei dem mit einer Stereokamera auf einem Kleinbildfilm durch einen Trennsteg getrennte Stereobilder erzeugt werden, die unzerschnitten in einem Stereorahmen gefaßt und mit einem Stereoprojektor projiziert werden können, wobei der Objektivabstand der Kamera und der des Stereoprojektors etwas kleiner bemessen sind als der Bildfensterrahmenabstand, dadurch gekennzeichnet, daß der Bildfensterrahmenabstand (8) 50 mm und die Breite (9) des Stereorahmens 100 mm beträgt, so daß die Stereobildpaare wahlweise neben Standard-Kleinbilddiapositiven des Formats 50 × 50 mm projiziert werden können.

2. Stereo-System nach Anspruch 1, dadurch gekennzeichnet, daß beiderseits der Mitte auf dem Trennsteg (6) zwischen den Halbbildern paarweise kennzeichnende Daten aufgezeichnet sind.

3. Stereo-System nach Anspruch 2, dadurch gekennzeichnet, daß die Daten zu jeweils drei übereinanderliegenden Datenpunkten zusammengefaßt sind.

4. Stereo-Kamera für das Stereo-System nach Anspruch 1, dadurch gekennzeichnet, daß die Kamera einen Geradeaus-Strahlengang und einen gleichmäßigen Schaltschritt von achtzehn, neunzehn oder zwanzig Perforationen aufweist.

5. Stereo-Kamera für das Stereo-System nach Anspruch 1, dadurch gekennzeichnet, daß kleine Doppeloptiken zur paarweisen automatischen Datenaufzeichnung vorgesehen sind, die die auf einer Anzeigevorrichtung dargestellten Daten erfassen.

6. Stereo-Diarahmen für das Stereo-System nach Anspruch 1, dadurch gekennzeichnet, daß der Filmstreifen jeweils durch Noppen in der richtigen Lage fixiert und plan gehalten ist.

7. Stereo-Diarahmen nach Anspruch 6, dadurch gekennzeichnet, daß der Rahmen in Zuordnung zu den Datenpunkten übereinanderliegende kreisförmige Durchbrüche aufweist.

**Claims**

1. 35 mm stereo system in which a stereo camera produces stereo images separated by a separating band on a 35 mm film, the images can be mounted uncut in a stereo mount and projected using a stereo projector, and the spacing of the objectives of the camera and that of the stereo projector objectives are rather smaller than the spacing of the window framing, characterised by making the spacing of the window framing (8) 50 mm and the width (9) of the stereo mount 100 mm, with the result that the pairs of stereo images can be projected alongside standard 35 mm diapositives of $50 \times 50$ mm format, as desired.

2. Stereo system according to Claim 1, characterised in that characteristic data are recorded pairwise on both sides of the centre on the separating band (6) between the frames.

3. Stereo system according to Claim 2, characterised in that the data are in each case combined into three superposed data points.

4. Stereo camera for the stereo system according to Claim 1, characterised in that the camera has a straight-ahead optical path and a uniform switching step of 18, 19 or 20 perforations.

5. Stereo camera for the stereo system according to Claim 1, characterised in that small double optical systems are provided for the pairwise automatic data recording and detect the data displayed on a display.

6. Stereo slide mount for the stereo system according to Claim 1, characterised in that the film strip is in each case fixed in the correct position by pins and held flat.

7. Stereo slide mount according to Claim 6, characterised in that associated with the data points the mount exhibits superposed circular openings.

**Revendications**

1. Système stéréoscopique à image réduite dans lequel on obtient au moyen d'un appareil photographique stéréoscopique sur un film à image réduite des images stéréoscopiques séparées par une bande de liaison, images qui peuvent être montées par paires non coupées dans un cadre stéréoscopique et projetées avec un projecteur stéréoscopique, les distances entre objectifs de l'appareil photographique d'une part et du projecteur stéréoscopique d'autre part étant prévues légèrement plus faibles que la distance entre les fenêtres desdites images dans leur cadre, caractérisé en ce que la distance entre les fenêtres des images dans le cadre (8) est de 50 mm et la largeur (9) du cadre stéréoscopique est de 100 mm de sorte que l'on peut projeter à volonté aussi bien des paires d'images stéréoscopiques que des diapositives réduites standard du format $50 \times 50$ mm.

2. Système stéréoscopique conforme à la revendication 1, caractérisé en ce que des données d'identification (6) sont inscrites par paires sur la bande de liaison de chaque côté du milieu de celle-ci.

3. Système stéréoscopique conforme à la revendication 2, caractérisé en ce que les données sont rassemblées respectivement de chaque côté en trois zones ponctuelles d'inscription disposées les unes au-dessus des autres.

4. Appareil photographique stéréoscopique pour le système stéréoscopique conforme à la revendication 1, caractérisé en ce que cet appareil comporte un cheminement rectiligne de la lumière et un pas d'avance régulier de 18, 19 ou 20 perforations.

5. Appareil photographique stéréoscopique pour le système stéréoscopique conforme à la revendication 1, caractérisé en ce qu'il est prévu de petites optiques doubles pour l'inscription automatique par paire des données d'identification ces dernières étant saisies sur un dispositif indicateur ou elles sont présentées.

6. Cadre de diapositive stéréoscopique pour le système stéréoscopique conforme à la revendication 1, caractérisé en ce que le film est maintenu dans sa position correcte et positionné à plat par des bossages appropriés.

7. Cadre de diapositive stéréoscopique conforme à la revendication 6, caractérisé en ce qu'il présente des ouvertures circulaires disposées les unes au-dessus des autres en correspondance avec les zones ponctuelles d'inscription des données d'identification.

0 140 942